# EUROPÄISCHE PATENTSCHRIFT

(11) **EP 3 665 101 B1**
(45) Veröffentlichungstag und Bekanntmachung des Hinweises auf die Patenterteilung: **19.03.2025**
(21) Anmeldenummer: 18750406.3
(22) Anmeldetag: 02.08.2018
(51) Int. Cl.: B65B 55/19, B65B 61/22, B65D 81/26

(54) **VERPACKUNGSMATERIAL MIT FIXIERTEM TROCKENMITTELBEHÄLTER, UND VERFAHREN**
PACKAGING MATERIAL WITH A FIXED DESICCANT CONTAINER, AND METHOD
MATÉRIEL D'EMBALLAGE COMPRENANT UN RÉCIPIENT D'AGENT DÉSHYDRATANT FIXÉ, ET PROCÉDÉ

(30) Priorität: 10.08.2017 DE 102017213943
(43) Veröffentlichungstag der Anmeldung: 17.06.2020
(73) Patentinhaber: Robert Bosch GmbH, 70442 Stuttgart (DE)
(72) Erfinder: RUPP, Jochen, 70569 Stuttgart (DE)
(86) Internationale Anmeldenummer: PCT/EP2018/070979
(87) Internationale Veröffentlichungsnummer: WO 2019/030108

(56) Entgegenhaltungen:
- EP-A2- 0 481 730
- DE-A1- 19 720 112
- DE-U1- 202011 000 845
- US-A1- 2013 153 445

## Beschreibung

### Stand der Technik

Systeme zur Prozessierung oder Analyse einer chemischen oder biologischen Probe, beispielsweise mikrofluidische oder Lab-on-a-Chip-Systeme, umfassen häufig feuchteempfindliche Vorrichtungen oder Bauteile, beispielsweise mikrofluidische Kartuschen, in denen lyophilisierte Reagenzien vorgelagert sind. Für eine langzeitstabile Lagerung werden diese Vorrichtungen oder Bauteile davon daher vor einem Einsatz oft in versiegelten oder verschweißten Verbundverpackungen aufbewahrt.

Aus der US 2013/0153445 A1 ist ein Sorptionsmittelbehälter umfassend mehrere versiegelte Taschen, welche in Streifenform miteinander verbunden sind, offenbart.

Die DE 20 2011 000 845 U1 zeigt eine gasdichte Verpackung mit kontrollierter Innenatmosphäre, wobei durch wenigstens eine Siegelnaht befestigt, im Innern der Verpackung wenigstens eine den Sauerstoffgehalt regulierende funktionelle Einheit angeordnet ist.

Aus der DE 197 20 112 A1 ist ein Verfahren zur Fixierung eines Trockenmittelbeutels in einem schlauchförmigen Verpackungssack aus Kunststoff bekannt.

### Offenbarung der Erfindung

### Vorteile der Erfindung

Vor diesem Hintergrund die betrifft Erfindung ein Verpackungsmaterial zum Verpacken einer Vorrichtung, insbesondere einer mikrofluidischen Vorrichtung.

Das Verpackungsmaterial umfasst einen Trockenmittelbehälter, insbesondere einen Trockenmittelbeutel, wobei der Trockenmittelbehälter über eine stellenweise Schmelzung des Verpackungsmaterials, insbesondere eines Materials des Verpackungsmaterials, fixiert ist.

Unter einer Vorrichtung kann insbesondere ein Bauteil, ein Gerät oder ein Teil eines Systems zur Prozessierung oder Analyse einer chemischen oder biologischen Probe verstanden werden, beispielsweise für biochemische oder medizinische Zwecke. Unter einem Verpackungsmaterial kann insbesondere eine Verpackung oder ein Teil einer Verpackung, insbesondere eine Hülle zur partiellen oder vollständigen Umhüllung der Vorrichtung, verstanden werden. Ferner kann unter einem Verpackungsmaterial insbesondere eine Folie mit einer oder mehreren Schichten, insbesondere eine Verbundfolie, verstanden werden, welche beispielsweise in Form eines Beutels oder einer Tasche ausgebildet werden können. Unter einem Trockenmittelbehälter kann insbesondere ein Behälter zur Aufnahme eines Trockenmittels verstanden werden. Dabei kann der Trockenmittelbehälter eine steife oder verformbare Hülle aufweisen. Vorzugsweise handelt es sich bei dem Trockenmittelbehälter um einen Trockenmittelbeutel, also um einen Beutel zur Aufnahme von Trockenmittel. Vorzugsweise enthält der Trockenmittelbehälter bereits das Trockenmittel vor der Fixierung mit dem Verpackungsmaterial. Unter einem Trocknungsmittel ist insbesondere ein Stoff oder ein Stoffgemisch zu verstehen, das Wasser oder andere Flüssigkeiten, beispielsweise Lösungsmittel, für eine Trocknung oder Trockenhaltung einem nahegelegenen Objekt entziehen können. Typische Trockenmittel sind beispielsweise Silicagel, Zeolithe, Natriumsulfat, Magnesiumsulfat, Aluminiumoxid, Calcium, Calciumhydrid, Calciumoxid, Calciumsulfat, Kaliumcarbonat, Kaliumhydroxid, Kupfersulfat, Lithiumaluminiumhydrid oder Natriumhydroxid. Unter einer Schmelzung des Verpackungsmaterials ist insbesondere die Erweichung und/oder Verformung des Verpackungsmaterials zu verstehen, insbesondere unter Hitzeeinwirkung, insbesondere gefolgt von einer Wiedererstarrung durch Erkalten. Dabei kann ein Material des Verpackungsmaterials und/oder ein Material des Trockenmittelbehälters stellenweise für die Fixierung des Trockenmittelbehälters geschmolzen sein, insbesondere ein Material einer Hülle des Verpackungsmaterials beziehungsweise des Trockenmittelbehälters. Unter der Fixierung des Trockenmittelbehälters mit dem Material über eine stellenweise Schmelzung ist insbesondere zu verstehen, dass eine feste Verbindung zwischen dem Material und dem Trockenmittelbehälter über eine, insbesondere durch Hitze hervorgerufene, teilweise Aufweichung des Materials, gefolgt von einer Kontaktierung des aufgeweichten Materials mit dem Trockenmittelbehälter, gefolgt von einer erneuten Erhärtung, insbesondere durch Auskühlung, des Materials verursacht ist. Mit anderen Worten wird das Material mit dem Trockenmittelbehälter über eine Erweichung des Materials verschmolzen. Alternativ oder zusätzlich kann auch eine, insbesondere durch Hitze hervorgerufene, teilweise Aufweichung des Materials des Trockenmittelbehälters für eine Verschmelzung mit dem Verpackungsmaterial erfolgen.

Das erfindungsgemäße Verpackungsmaterial hat den Vorteil, dass der Trockenmittelbehälter aufgrund der Verschmelzung mit dem Verpackungsmaterial an einer wohldefinierten Stelle bezüglich des Verpackungsmaterials und bezüglich der mit dem Verpackungsmaterial zu verpackenden Vorrichtung fix angeordnet ist. Somit kann der Trockenmittelbehälter vorteilhafterweise nahe an gewünschten, insbesondere feuchteempfindlichen, Stellen der zu verpackenden Vorrichtung unverrückbar stabil positioniert werden. Außerdem erfolgt vorteilhafterweise kein Verrutschen des Trockenmittelbehälters bei einer Bewegung der verpackten Vorrichtung, so dass die Gefahr einer Beschädigung sensitiver Bereiche der Vorrichtung durch den Trockenmittelbehälter, beispielsweise in Form von Kratzspuren, verringert ist. Ferner ist von besonderem Vorteil, dass ein Material des Verpackungsmaterials als Verbindungsmittel zwischen dem Verpackungsmaterial und dem Trockenmittelbehälter wirkt. Somit ist kein zusätzlicher Stoff, insbesondere ein Klebstoff, für die Verbindung erforderlich, was eine mögliche schädliche Einwirkung des Stoffs auf die Vorrichtung ausschließt. Insbesondere wird ein sonst bei vielen Klebstoffen übliches Ausgasen oder ein unbeabsichtigter Transfer von Klebstoffresten auf die Vorrichtung vermieden. Darüber hinaus ist von Vorteil, dass bei einer Öffnung der Verpackung der Trockenmittelbehälter in der Regel fixiert bleibt und nicht unbeabsichtigt von der Verpackung getrennt wird. Dies führt zu einer hohen Anwenderfreundlichkeit des erfindungsgemäßen Verpackungsmaterials.

Vorzugsweise ist der Trockenmittelbehälter über eine stellenweise Eindringung eines Materials des Verpackungsmaterials in eine Hülle des Trockenmittelbehälters fixiert. Dadurch ist vorteilhafterweise eine besonderes zuverlässige Verbindung des Trockenmittelbehälters mit dem Verpackungsmaterial gegeben. Die Hülle des Trockenmittelbehälters ist dabei so ausgestaltet, dass das geschmolzene Material des Verpackungsmaterials zumindest teilweise in die Hülle eindringen kann. Insbesondere kann die Hülle Fasern oder einen Faserwerkstoff umfassen, so dass das Eindringen zu einem zumindest teilweisen Umschließen mehrerer Fasern durch das Material führt, beispielweise Papier, Baumwolle oder ein sonstiger Faserstoff, beispielsweise im Verbund mit Kunststoff. Ein dadurch erzeugter Formschluss zwischen dem Material und der Hülle des Trockenmittelbehälters ist vorteilhafterweise besonders stabil.

Gegenstand der Erfindung ist auch ein Verfahren zum Verbinden des Trockenmittelbehälters mit dem Verpackungsmaterial, also ein erfindungsgemäßes Herstellverfahren für das erfindungsgemäße Verpackungsmaterial. Bei dem Trockenmittelbehälter kann es sich somit, wie oben ausgeführt, insbesondere um einen Trockenmittelbeutel und bei der Vorrichtung insbesondere um eine mikrofluidische Vorrichtung handeln. In einem ersten Schritt des Verfahrens werden das Verpackungsmaterial und der Trockenmittelbehälters relativ zueinander positioniert. In einem zweiten Schritt erfolgt eine Erhitzung zumindest eines Bereichs des Verpackungsmaterials, so dass das Verpackungsmaterial in dem Bereich für die Verbindung des Trockenmittelbehälters mit dem Verpackungsmaterial stellenweise schmilzt. Wie oben beschrieben, dringt dabei vorzugsweise ein Teil des Materials in die Hülle des Trockenmittelbehälters ein, bevorzugt für eine teilweises Umschließen von Fasern der Hülle. Während einem Auskühlen des Materials härtet sich vorzugsweise die Verbindung des Trockenmittelbehälters mit dem Verpackungsmaterial.

In einer besonders vorteilhaften Ausgestaltung der Erfindung umfasst das Verpackungsmaterial Verbundwerkstoff, insbesondere einen Aluminium/Polypropolyen-Verbund. Dies hat zum einen den Vorteil, dass Verbundwerkstoffe erfahrungsgemäß gut geeignete Verpackungsmaterialien darstellen um zum anderen unter Hitzeeinwirkung leicht schmelzen. Bevorzugt umfasst das schmelzbare Material dabei Kunststoff.

In einer vorteilhaften Ausgestaltung der Erfindung erfolgt eine Erhitzung des Bereichs so lange, bis zumindest ein Teil der Hülle des Trockenmittelbehälters ebenfalls erweicht oder schmilzt. Dies hat den Vorteil, dass sich der Teil der Hülle und das geschmolzene Material für eine besonders starke Verbindung miteinander mischen können. Vorzugsweise weist die Hülle des Trockenmittelbehälters dafür ein schmelzbares Material auf, insbesondere Kunststoff.

Gemäß einer besonders vorteilhaften Weiterbildung der Erfindung wird der Trockenmittelbehälter vor der Erhitzung an einer vorgegebenen Stelle bezüglich der Vorrichtung angeordnet. Dies hat den Vorteil, dass auf einfache Weise sichergestellt werden kann, dass sich der Trockenmittelbehälter nach der Verpackung der Vorrichtung nahe an einer oder direkt angrenzend an eine gewünschte, insbesondere feuchteempfindliche, Stelle der Vorrichtung befindet. Eine Versieglung des Verpackungsmaterials zum Verschließen der Vorrichtung kann dabei vor, während oder nach der Erhitzung erfolgen.

In einer besonders bevorzugten Weiterbildung der Erfindung wird während oder nach der Erhitzung eine Kraft auf das Verpackungsmaterial in Richtung des Trockenmittelbehälters ausgeübt. Dies unterstützt vorteilhafterweise eine Verbindung des Verpackungsmaterials mit dem Trockenmittelbehälter.

Vorzugsweise erfolgt die Erhitzung des Bereichs über eine Kontaktierung mit einem Heizstempel. Dies hat den Vorteil, dass die erforderliche Hitze wohldefiniert und begrenzt eingebracht wird und somit hitzeempfindliche Teile des Verpackungsmaterials oder der Vorrichtung auf einfache Weise verschont bleiben können.

In einer vorteilhaften Weiterbildung der Erfindung weist das Verpackungsmaterial auf einer dem Trockenmittelbehälter abgewandten Seite der Schmelzung eine eingeprägte Kontur auf. Die Kontur kann dabei vorzugsweise eine für den Benutzer der Vorrichtung nützliche Information kodieren. In einer besonders vorteilhaften Ausgestaltung des erfindungsgemäßen Verfahrens wird die Kontur über den Heizstempel eingeprägt. Der Heizstempel umfasst dazu die erforderliche Prägestruktur. Dies hat den Vorteil, dass in nur einem Schritt sowohl der Trockenmittelbehälter mit dem Verpackungsmaterial verbunden als auch die Kontur erzeugt werden kann.

Gemäß einer bevorzugten Weiterbildung der Erfindung erfolgt eine Versiegelung einer Öffnung des Verpackungsmaterials nach Einbringung der Vorrichtung in das Verpackungsmaterial gemeinsam mit der Erhitzung des Bereichs. Vorzugsweise hat das Verpackungsmaterial in dieser Weiterbildung die Form eines Beutels zur Aufnahme der Vorrichtung. Insbesondere wenn die Versiegelung ebenfalls über eine teilweise Schmelzung des Materials des Verbundbeutels erfolgt, hat diese Weiterbildung den Vorteil, dass zwei Verfahrensschritte in einem durchgeführt werden können. Beispielsweise umfasst der Heizstempel hierbei einen zweiten Bereich zur Hitzeversiegelung der Öffnung des Verpackungsmaterials.

### Kurze Beschreibung der Zeichnungen

Ausführungsbeispiele der Erfindung sind in den Zeichnungen schematisch dargestellt und in der nachfolgenden Beschreibung näher erläutert. Für die in den verschiedenen Figuren dargestellten und ähnlich wirkenden Elemente werden gleiche Bezugszeichen verwendet, wobei auf eine wiederholte Beschreibung der Elemente verzichtet wird.

Es zeigen
- Figur 1: ein Ausführungsbeispiel des erfindungsgemäßen Verpackungsmaterials und
- Figur 2: ein Ablaufdiagramm zu einem Ausführungsbeispiel des erfindungsgemäßen Verfahrens.

### Ausführungsformen der Erfindung

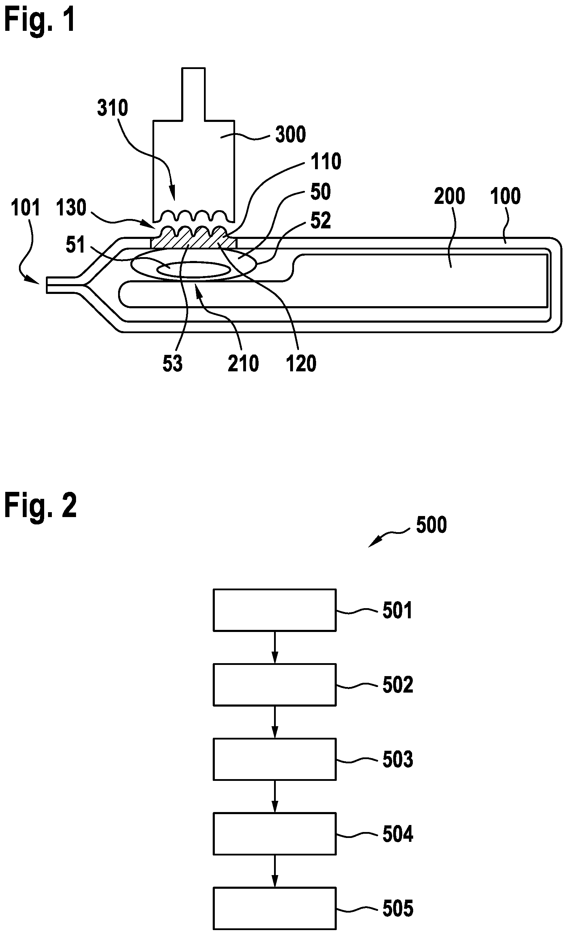

Figur 1 zeigt schematisch ein Ausführungsbeispiel des erfindungsgemäßen Verpackungsmaterials 100 zum Verpacken einer Vorrichtung 200. In diesem Beispiel handelt es sich bei der Vorrichtung 200 um eine mikrofluidische Vorrichtung, nämlich eine Kartusche 200 für ein Lab-on-a-Chip-System. Das Verpackungsmaterial 100 umfasst einen Trockenmittelbehälter 50, in diesem Beispiel einen Trockenmittelbeutel 50 gefüllt mit Trockenmittel 51, beispielsweise Silicagel. Der Trockenmittelbehälter 50 ist über eine stellenweise Schmelzung 110 eines Materials 120 des Verpackungsmaterials 100 mit dem Verpackungsmaterial 100 fest verbunden.

In diesem Beispiel handelt es sich bei dem Verpackungsmaterial 100 um eine Beutel 100 aus Verbundwerkstoff, beispielsweise um einen Beutel hergestellt aus einer Verbundfolie mit der Schichtfolge Polyethylen, Aluminium, Polypropylen. In Figur 1 ist dargestellt, dass sich die Kartusche 200 bereits in dem Verbundbeutel 100 befindet und die Öffnung 101 des Verbundbeutels 100 bereits versiegelt ist. Ferner ist der Trockenmittelbeutel 50 bereits mit dem Beutel 100 über die Schmelzung 110 verbunden. In diesem Beispiel weist der Trockenmittelbeutel 50 einen Faserwerkstoff auf, so dass das geschmolzene Material 120 teilweise in die Hülle 52 des Trockenmittelbeutels 50 eindringen und Fasern der Hülle 52 für eine formschlüssige Verbindung des Trockenmittelbeutels 50 mit dem Verbundbeutel 100 umschließen konnte. Beispielsweise umfasst der Trockenmittelbeutel 50 dafür einen Faserstoff, Baumwolle, ein Vliesmaterial oder Papier. Alternativ oder zusätzlich kann die Hülle 52 ein schmelzbares Material 53 für ein Verschmelzen mit dem Material 120 des Verbundbeutels 100 aufweisen. Wie ferner in Figur 1 schematisch dargestellt, wurde über einen Heizstempel 300 mit Prägestruktur 310 die für die Schmelzung erforderliche Hitze eingebracht und gleichzeitig eine Kontur 130 auf die Außenseite des Verbundbeutels 100 eingeprägt. Die Kontur 130 kann dabei für einen Benutzer der Vorrichtung 100 nützliche Information über die Kartusche 200 in Form einer Schrift oder Zeichen kodieren, beispielsweise eine Angabe zur Herkunft, Art und/oder Verwendbarkeit der Kartusche 200.

Figur 2 zeigt schematisch ein Ablaufdiagramm eines Ausführungsbeispiels des erfindungsgemäßen Verfahrens 500, mit welchem beispielsweise die in Figur 1 dargestellte Verpackung der Kartusche 200 mit dem Verpackungsmaterial 100 und damit verbundenen Trockenmittelbehälter 50 erreicht werden kann. In einem ersten Schritt 501 des Verfahrens 500 wird der Trockenmittelbeutel 100 auf einer vorgegebene Stelle 210 der Kartusche 200 platziert, beispielsweise nahe dem besonders feuchteempfindlichen vorderen Abschnitt 210 der Kartusche. In einem zweiten Schritt 502 werden die Kartusche 200 und der Trockenmittelbeutel 100 in den Verbundbeutel 100 gegeben. Der erste Schritt 501 und der zweite Schritt 502 können auch parallel oder in umgekehrter Reihenfolge erfolgen. In einem dritten Schritt 503 wird die Öffnung 101 des Verbundbeutels 100 versiegelt. In einem vierten Schritt erfolgt eine Erhitzung des an den Trockenmittelbeutel 50 angrenzenden Materials 110 des Verbundbeutels 100, so dass das Material 110 schmilzt und dabei teilweise in die Hülle 52 des Trockenmittelbeutels 50 für einen Formschluss mit den Fasern der Hülle 52 eindringt. Die Erhitzung erfolgt dabei durch eine Kontaktierung der Prägestruktur 310 des Heizstempels 300 mit dem Material, so dass auch gleichzeitig die Kontur 130 in den Verbundbeutel 100 eingeprägt wird. Wenn keine Kontur 130 benötigt wird, kann auch ein Heizstempel mit flacher Stempeloberfläche verwendet werden. Beispielsweise erfolgt einer Erhitzung des Stempels auf eine Temperatur zwischen 190 und 250 Grad Celsius und eine Dauer einer Hitzeeinwirkung auf das Material 110 von 1 bis 5 Sekunden. Die Dauer hängt dabei von der Dicke und der Materialzusammensetzung des Verbundmaterials ab, so dass das Material 110 bis auf die den Trockenmittelbeutel 50 kontaktierende Seite des Verbundbeutels 100 erweicht wird. Dabei kann der Heizstempel 300 beispielsweise eine Anpresskraft zwischen 1 und 15 Newton ausüben. Der dritte Schritt 503 der Versiegelung des Verbundbeutels 100 und der vierte Schritt 504 der Erhitzung und Prägung können dabei vorzugsweise auch gleichzeitig ausgeführt werden, insbesondere, wenn die Versiegelung ebenfalls über eine teilweise Aufschmelzung des Materials des Verbundbeutels 100 erfolgt. In einem fünften Schritt 505 kann der Verbundbeutel 100 nach einer Abkühlung weiterbefördert werden.

## Patentansprüche

1. Verpackungsmaterial (100) zum Verpacken einer Vorrichtung (200), insbesondere einer mikrofluidischen Vorrichtung (200), wobei das Verpackungsmaterial (100) einen Trockenmittelbehälter (50), insbesondere einen Trockenmittelbeutel (50), umfasst, wobei der Trockenmittelbehälter (50) über eine stellenweise Schmelzung (110) des Verpackungsmaterials (100) fixiert ist, **dadurch gekennzeichnet, dass** eine Hülle (52) des Trockenmittelbehälters (50) Fasern oder einen Faserwerkstoff umfasst.

2. Verpackungsmaterial (100) nach Anspruch 1 wobei der Trockenmittelbehälter (50) über eine stellenweise Eindringung des Verpackungsmaterials (100, 120) in die Hülle (52) des Trockenmittelbehälters (50) fixiert ist.

3. Verpackungsmaterial (100) nach Anspruch 1 oder 2, wobei das Verpackungsmaterial (100) Verbundwerkstoff umfasst.

4. Verpackungsmaterial (100) nach einem der vorhergehenden Ansprüche, wobei das Verpackungsmaterial (100) auf einer dem Trockenmittelbehälter (50) abgewandten Seite der Schmelzung (110) eine eingeprägte Kontur (130) aufweist.

5. Verpackungsmaterial (100) nach einem der vorhergehenden Ansprüche, wobei die Hülle (52) des Trockenmittelbehälters (50) ein schmelzbares Material (53) für ein Verschmelzen mit dem Verpackungsmaterial (100) aufweist.

6. Verfahren (500) zum Verbinden eines Trockenmittelbehälters (50), insbesondere eines Trockenmittelbeutels (50), wobei eine Hülle (52) des Trockenmittelbehälters (50) Fasern oder einen Faserwerkstoff umfasst, mit einem Verpackungsmaterial (100) zum Verpacken einer Vorrichtung (200), insbesondere einer mikrofluidischen Vorrichtung (200), umfassend die Schritte:
• Positionierung des Verpackungsmaterials (100) und des Trockenmittelbehälters (50) zueinander;
• Erhitzung zumindest eines Bereichs des Verpackungsmaterials (100), so dass das Verpackungsmaterial (100) in dem Bereich für die Verbindung des Trockenmittelbehälters (50) mit dem Verpackungsmaterial (100) stellenweise schmilzt.

7. Verfahren (500) nach Anspruch 6, wobei der Trockenmittelbehälter (50) vor der Erhitzung an einer vorgegebenen Stelle (210) bezüglich der Vorrichtung (200) angeordnet wird.

8. Verfahren (500) nach Anspruch 7, wobei während oder nach der Erhitzung eine Kraft auf das Verpackungsmaterial (100) in Richtung des Trockenmittelbehälters (50) ausgeübt wird.

9. Verfahren (500) nach einem der Ansprüche 8, wobei die Erhitzung des Bereichs über eine Kontaktierung mit einem Heizstempel (300) erfolgt.

10. Verfahren (500) nach einem der Ansprüche 9, wobei eine Versiegelung einer Öffnung des Verpackungsmaterials (100) nach Einbringung der Vorrichtung (200) in das Verpackungsmaterial (100) gemeinsam mit der Erhitzung des Bereichs erfolgt.

## Claims

1. Packaging material (100) for packaging a device (200), in particular a microfluidic device (200), wherein the packaging material (100) comprises a desiccant container (50), in particular a desiccant pouch (50), wherein the desiccant container (50) is fixed by way of locally melting (110) the packaging material (100), **characterized in that** a sleeve (52) of the desiccant container (50) comprises fibres or a fibrous material.

2. Packaging material (100) according to Claim 1, wherein the desiccant container (50) is fixed via local penetration of the packaging material (100, 120) into the sleeve (52) of the desiccant container (50).

3. Packaging material (100) according to Claim 1 or 2, wherein the packaging material (100) comprises composite material.

4. Packaging material (100) according to one of the preceding claims, wherein the packaging material (100) has an embossed contour (130) on a side of the melting (110) that faces away from the desiccant container (50).

5. Packaging material (100) according to one of the preceding claims, wherein the sleeve (52) of the desiccant container (50) comprises a meltable material (53) for fusing to the packaging material (100).

6. Method (500) for connecting a desiccant container (50), in particular a desiccant pouch (50), wherein a sleeve (52) of the desiccant container (50) comprises fibres or a fibrous material, to a packaging material (100) for packaging a device (200), in particular a microfluidic device (200), comprising the steps of:
• positioning the packaging material (100) and the desiccant container (50) in relation to one another;
• heating at least one region of the packaging material (100), with the result that the packaging material (100) melts locally in the region for the connection of the desiccant container (50) to the packaging material (100).

7. Method (500) according to Claim 6, wherein the desiccant container (50) is arranged at a predefined location (210) with respect to the device (200) prior to the heating.

8. Method (500) according to Claim 7, wherein a force is exerted on the packaging material (100) in the direction towards the desiccant container (50) during or after the heating.

9. Method (500) according to Claim 8, wherein the region is heated by being contacted with a heating die (300).

10. Method (500) according to Claim 9, wherein an opening of the packaging material (100) is sealed, after the device (200) is introduced into the packaging material (100), jointly with the heating of the region.

## Revendications

1. Matériau d'emballage (100) pour emballer un dispositif (200), notamment un dispositif microfluidique (200), le matériau d'emballage (100) comprenant un récipient d'agent desséchant (50), notamment un sac d'agent desséchant (50), le récipient d'agent desséchant (50) étant fixé par l'intermédiaire d'une fusion localisée (110) du matériau d'emballage (100), **caractérisé en ce qu'**une enveloppe (52) du récipient d'agent desséchant (50) comprend des fibres ou un matériau fibreux.

2. Matériau d'emballage (100) selon la revendication 1 dans lequel le récipient d'agent desséchant (50) est fixé par l'intermédiaire d'une pénétration localisée du matériau d'emballage (100, 120) dans l'enveloppe (52) du récipient d'agent desséchant (50).

3. Matériau d'emballage (100) selon la revendication 1 ou 2, dans lequel le matériau d'emballage (100) comprend une matière composite.

4. Matériau d'emballage (100) selon l'une quelconque des revendications précédentes, dans lequel le matériau d'emballage (100) présente un contour estampé (130) sur un côté de la fusion (110) détourné du récipient d'agent desséchant (50).

5. Matériau d'emballage (100) selon l'une quelconque des revendications précédentes, dans lequel l'enveloppe (52) du récipient d'agent desséchant (50) présente un matériau fusible (53) destiné à être fusionné avec le matériau d'emballage (100).

6. Procédé (500) pour relier un récipient d'agent desséchant (50), notamment un sac d'agent desséchant (50), une enveloppe (52) du récipient d'agent desséchant (50) comprenant des fibres ou un matériau fibreux, à un matériau d'emballage (100) pour emballer un dispositif (200), notamment un dispositif microfluidique (200), comprenant les étapes suivantes :
- le positionnement du matériau d'emballage (100) et du récipient d'agent desséchant (50) l'un par rapport à l'autre ;
- le chauffage d'au moins une zone du matériau d'emballage (100) de telle sorte que le matériau d'emballage (100) fonde de manière localisée dans la zone pour la liaison du récipient d'agent desséchant (50) au matériau d'emballage (100).

7. Procédé (500) selon la revendication 6, dans lequel le récipient d'agent desséchant (50) est agencé à un emplacement prédéterminé (210) par rapport au dispositif (200) avant le chauffage.

8. Procédé (500) selon la revendication 7, dans lequel, pendant ou après le chauffage, une force est exercée sur le matériau d'emballage (100) en direction du récipient d'agent desséchant (50).

9. Procédé (500) selon la revendication 8, dans lequel le chauffage de la zone est effectué par une mise en contact avec un poinçon chauffant (300).

10. Procédé (500) selon la revendication 9, dans lequel un scellement d'une ouverture du matériau d'emballage (100) après l'insertion du dispositif (200) dans le matériau d'emballage (100) est effectué conjointement avec le chauffage de la zone.
